# EUROPEAN PATENT APPLICATION

(11) **EP 0 665 666 A1**
(43) Date of publication of application: **02.08.1995**
(21) Application number: 94300661.9
(22) Date of filing: 28.01.1994
(51) Int. Cl.: H04L 12/26

(54) **Data monitoring apparatus and method**

(71) Applicant: HALLIBURTON COMPANY, Duncan Oklahoma 73536 (US)
(72) Inventor: Fletcher, Douglas J., Duncan, Oklahoma 73533 (US); Clark, Mark Allen, Duncan, Oklahoma 73533 (US); Kehn, Robert Douglas, Duncan, Oklahoma 73533 (US)
(74) Representative: Wain, Christopher Paul

(57) **Abstract**

A data signal capturing interface (14) permits a personal computer (16) to be used for displaying data transmitted between other devices (4,6), for example at a speed such as 125,000 baud. This interface (14) forms part of a data scope (10) that further comprises a connector cable (12) for connecting into the data transmission system (2) so that the data signals are also communicated through the connector cable (12) to the data signal capturing interface (14) that is connected to the connector cable (12), and a personal computer (16) connected to the data signal capturing interface (14) for displaying data signals stored in the data signal capturing interface (14). A method of monitoring data signals transmitted between at least two devices (4,6) over a local area network cable connecting the devices at an oil or gas well site comprises copying transmitted data signals into a memory (40) at the well site at a speed at least equal to a speed at which the data signals are transmitted on the local area network cable; and displaying at the well site on a monitor (38) of a personal computer (16) representations of the copied data signals.

## Description

This invention relates generally to data monitoring apparatus and methods and more particularly, but not by way of limitation, to a data scope and method for copying and displaying data transmitted over a local area network cable at an oil or gas well site to enable a user to confirm proper data transfer between two or more devices in the network or to detect and troubleshoot improper data transfer.

Typically during the development of an oil or gas well, various conditions are monitored by sensors and transducers which represent the magnitudes of sensed conditions with electrical signals. Examples of monitored conditions include density and flow rate of a fluid, such as a fracturing fluid or a cement slurry, being mixed at the well site preparatory to being pumped into the well. The representative electrical signals can be processed through microprocessor-based devices used at the well site such as to store data about the conditions or to control operations (e.g. a fluid or slurry mixing operation).

For at least some of these applications, Halliburton Services uses a local area network at a well site. This network includes two or more microprocessor-based devices (e.g. UNI-PRO II and COMPUPAC computers) connected by a local area network cable. Communications between devices use a suitable known protocol, such as Halliburton ILAN protocol, to provide for organized transmissions so that data can be transferred accurately from one device to another. In the particular Halliburton Services local area network using ILAN protocol, transmissions of data over the local area network cable occur at 125,000 baud (125 kilobaud).

Although the equipment within the local area network is reliable and the protocol provides for organized and accurate data transmissions, malfunctions can still occur. Whether these occur because of sending, receiving or connecting hardware problems or programming problems can be hard to determine. For example, in one case analytical reasoning led to a conclusion that a certain component of the network was at fault; however, after three weeks of debugging and flying in an engineer from the company providing the component, the problem was not solved. Only after a debug program happened across the actual problem (which it was not looking for), was the actual problem found.

This time consuming study likely could have been avoided if there had been a way to look directly at the data as it was being transferred. Given the known protocol, such a direct look at the data could have more quickly led one to the source of the problem. Thus, there is the need for an apparatus and method for monitoring data transmitted between two or more devices. Although there are RS-232 protocol data scopes that are operable up to 115.2 kilobaud and dedicated token ring and Ethernet units operable for transmission speeds above 4 megabaud, we are not aware of a data monitoring apparatus or method that displays, through the display screen of a personal computer, data transmitted at 125 kilobaud in a local area network at an oil or gas well.

We have now found a way to overcome or reduce the above-noted and other shortcomings of the prior art by providing an improved data monitoring apparatus and method. In a particular implementation, the invention provides a tool for viewing data that travels on an ILAN data transmission cable at an oil or gas well site. The invention displays the ILAN data through the display screen of a personal computer so that the user can immediately view the data transfer to determine quickly whether there is a problem, and if so, what the possible source is. Thus, the present invention is useful for debugging problems or finding potential problems occurring during data transfer between devices communicating over a local area network cable using a known protocol.

The present invention more generally provides a data scope, comprising: connector means for connecting into a data transmission system, which system has at least two devices between which data signals are communicated, so that the data signals are also communicated through the connector means; data signal capturing means, connected to the connector means, for receiving and storing data signals communicated through the connector means; and a personal computer connected to the data signal capturing means for displaying data signals stored in the data signal capturing means.

Pertaining to the data signal capturing means, the present invention provides an apparatus for enabling a personal computer to obtain data from a data transmission cable connecting at least two devices, wherein the personal computer has a personal computer microprocessor with a data bus. This apparatus comprises: input means for receiving data from the transmission cable; an apparatus microprocessor connected to the input means; a data memory connected to the apparatus microprocessor and the input means; a program memory connected to the apparatus microprocessor, the program memory programmed with means for operating the apparatus microprocessor to transfer data received by the input means to the data memory without communicating any signal onto the transmission cable; and means for connecting the data memory directly to the data bus of the personal computer microprocessor so that the personal computer microprocessor can directly access data stored in the data memory.

The present invention also provides a method of enabling a personal computer to display data communicated over a data transmission cable between at least two devices, wherein the personal computer has a personal computer microprocessor with a data bus. This method comprises: connecting a data signal capturing interface to the data transmission cable so that the data signals are also communicated to the data signal capturing interface; receiving and storing data signals in the data signal capturing interface; and transferring stored data signals into the personal computer from the data signal capturing interface for displaying data signals through a display screen of the personal computer.

The present invention further provides a method of monitoring data signals transmitted between at least two devices over a local area network cable connecting the devices at an oil or gas well site, the method comprising: copying transmitted data signals into a memory at the well site at a speed at least equal to a speed at which the data signals are transmitted on the local area network cable; and displaying at the well site on a monitor of a personal computer representations of the copied data signals.

In the data scopes of the present invention, the personal computer preferably comprises a microprocessor, a display and a data bus interconnecting said microprocessor, said display and said data signal capturing means so that data signals stored in said data signal capturing means are directly communicated over said data bus to said display. The personal computer can preferably further comprise a memory connected to said microprocessor and programmed for operating said microprocessor to retrieve a data signal in a first format from said data signal capturing means over said data bus, convert the retrieved data signal to a second format, and display the converted data signal through said display.

The data signal capturing means preferably comprises serial input means for receiving serial data from said connector means; a data signal capturing control microprocessor connected to said serial input means; a data memory connected to said data signal capturing control microprocessor and said serial input means; a program memory connected to said data signal capturing control microprocessor, said program memory being programmable with means for operating said data signal capturing control microprocessor to transfer data received by said serial input means to said data memory without communicating any signal onto said connector means and in to the data transmission system; and means for connecting said data memory directly to said data bus of said personal computer so that said microprocessor of said personal computer directly accesses data stored in said data memory.

In order that the invention may be more fully understood, reference is made to the accompanying drawings, wherein:
FIG. 1 is a pictorial block diagram of one embodiment of apparatus of the present invention connected to a local area network at an oil or gas well site.
FIG. 2 is a schematic drawing of an embodiment of connector of the present invention by which connection to the local area network is made.
FIGS. 3A-3D are schematic circuit diagrams of a data signal capturing interface embodiments of the present invention.
FIG. 4 is a flow chart of one example of operation of the present invention.

The illustrated embodiments are all by way of example only.

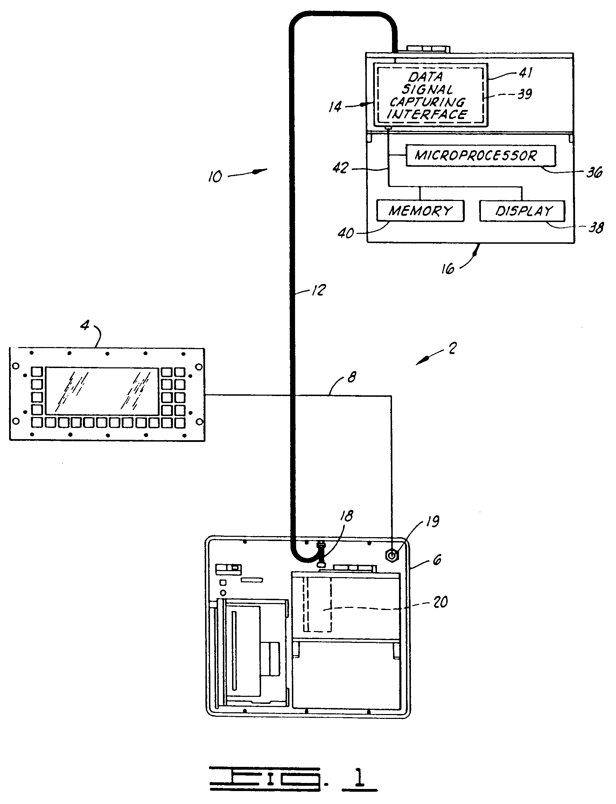

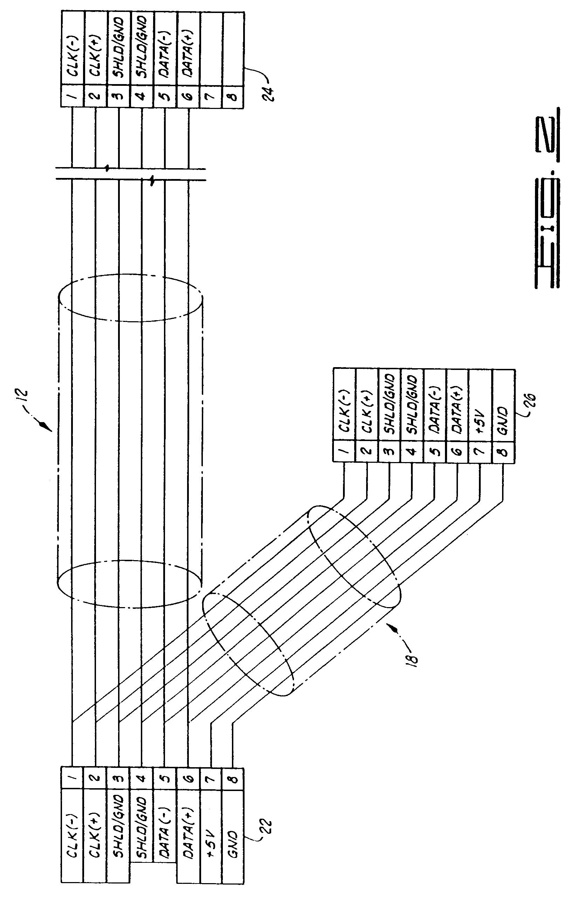

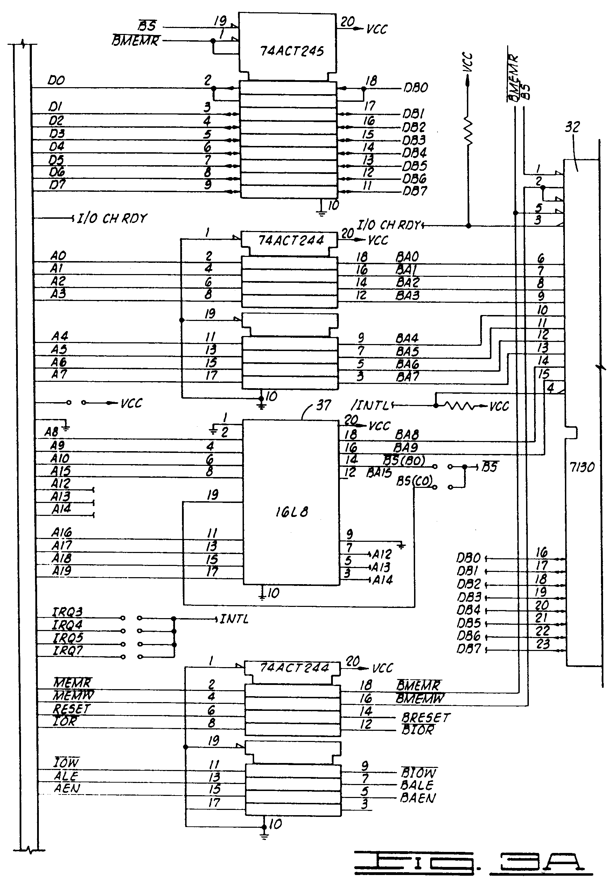

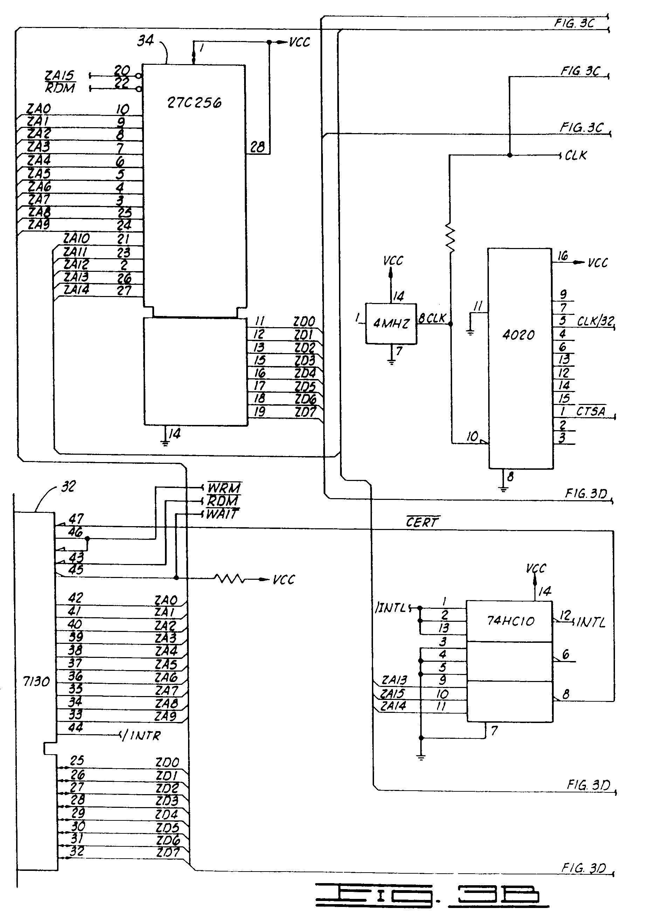

Referring to FIG. 1, the present invention is used to monitor data transmissions within a data transmission system 2 having at least two devices 4, 6 connected by a data transmission link 8. In a specific implementation, the device 4 is a UNI-PRO II computer, the device 6 is a COMPUPAC computer and the cable 8 is a multiconductor cable to which the devices 4, 6 are connected; all of these devices are provided by Halliburton Services, Duncan, Oklahoma. This particular system is used at oil or gas well sites for receiving, storing and using data generated from sensors or transducers (not shown) connected to one or more of the UNI-PRO II devices. Serial data transmissions between devices 4, 6 over the cable 8 utilize ILAN protocol (which is a non-RS-232 protocol) and are made at 125 kilobaud in this particular implementation.

To monitor such data transmissions, the present invention provides a data scope 10. The data scope 10 comprises connector means 12 for connecting the data scope 10 into the data transmission system 2 so that the data signals transferred over the cable 8 between the devices 4, 6 are also communicated into the data scope 10 through the connector means 12. Connected to the connector means 12 and forming another part of the data scope 10 is data signal capturing means 14 for receiving and storing data signals communicated through the connector means 12. The data signal capturing means 14 provides the interface between the connector means 12 and a personal computer 16 which forms still another part of the data scope 10 and which displays data signals stored in the data signal capturing means 14. In the preferred embodiment depicted in FIG. 1, the interface 14 is connected to the personal computer 16 within a housing of the personal computer 16.

As also depicted in FIG. 1, the connector means 12 of the preferred embodiment is an electrically conductive cable having one end connected to the data signal capturing interface 14 and another end connected as a branch from a coupling 18 in the COMPUPAC device 6. The coupling 18 connects a terminal 19 of the COMPUPAC device 6 receiving the transmission cable 8 to a conventional ILAN module 20 which is referred to further hereinbelow.

A particular implementation of the cable 12 and the coupling 18 are shown in FIG. 2. The coupling 18 is conventional for the particular system 2 described above and thus will not be further described other than to note it provides both an end plug 26 that connects to ILAN module 20 and an end plug 22 that interfaces to the transmission cable 8. The cable 12 as shown in FIG. 2 has six conductors that extend from adjacent the plug 22 to a plug 24 that connects to the data signal capturing interface 14. The type of signals communicated over the cable 12 are designated by the labeling in FIG. 2. The conductors of the cable 12 can be of any suitable length so that the personal computer 16 and the data signal capturing interface 14 housed therein can be spaced from the data transmission system 2 to allow for remotely monitoring the data transmissions that occur over the transmission cable 8.

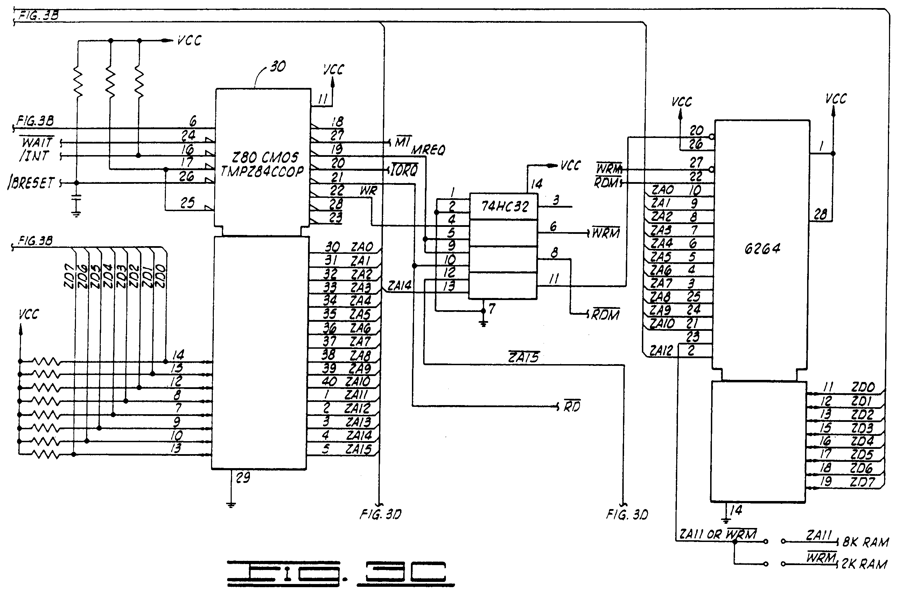

As mentioned above, the plug 24 of the cable 12 connects to the data signal capturing interface 14. More specifically, it connects to a serial input circuit 28 of the interface 14 as shown in FIG. 3D. The circuit 28 receives data transmission system serial data from the connected cable 12. With the illustrated Z80 SIO chip of the circuit 28 shown in FIG. 3D, "flags" in the transmitted data of the system 2 are filtered out; however, it is contemplated that another type of serial receiver allowing for the flags to be retained can be used (e.g., an 85230 serial input/output device).

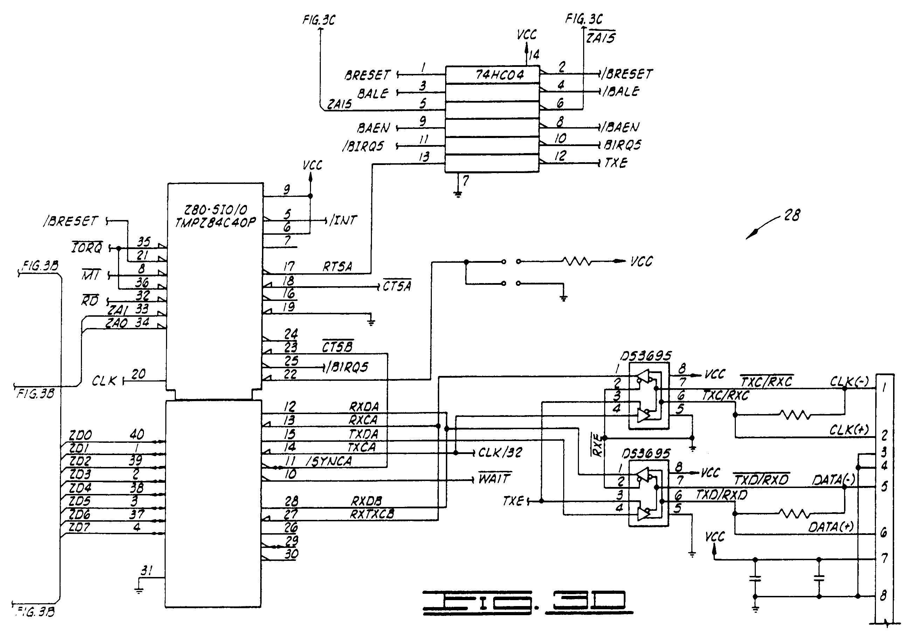

The interface 14 also includes a data signal capturing control microprocessor 30 (FIG. 3C) that is connected to the serial input circuit 28. The interface 14 further comprises a data memory 32 (FIGS. 3A and 3B) connected to the data signal capturing control microprocessor 30 and the serial input circuit 28. In the illustrated embodiment this is a dual port random access memory (RAM). Providing storage space for the program that operates the microprocessor 30 is a program memory 34 implemented in the particular embodiment by an erasable programmable read only memory (EPROM) (FIG. 3B) connected to the data signal capturing control microprocessor 30. As will be further described below, the program memory 34 is programmed with means for operating the data signal capturing control microprocessor 30 to transfer data received by the serial input circuit 28 to the data memory 32 without communicating any signal onto the cable 12 and into the data transmission system 2. The foregoing (including one port of the dual port memory 32) are connected by internal address and data buses and control lines as depicted in FIGS. 3B-3D.

FIG. 3A shows means for connecting the other port of the data memory 32 directly to the data bus, the address bus and control lines (identified in FIG. 3A) of a microprocessor 36 (FIG. 1) of the personal computer 16 so that the personal computer microprocessor 36 directly accesses data stored in the data memory 32. Included within this means is a programmable logic device (PLD) 37. The PLD 37 functions as an address decoder by which the personal computer 16 accesses the personal computer or display side of the dual port random access memory 32. The listing of the PLD programming for a particular implementation of the present invention is shown in Appendix A forming a part of this specification.

As shown in FIG. 1, the interface 14 of the preferred embodiment further includes means for mounting inside the personal computer 16. This includes a circuit board 39 on which the components shown in FIG. 3 are mounted, and it also includes a housing 41 in which the circuit board 39 is disposed.

The previously described elements (and the others shown in FIG. 3) of the data signal capturing interface 14 are the same as in the conventional ILAN module 20 in the device 6 of FIG. 1, except that a differently programmed program memory 34 and PLD 37 are used in the present invention. With such new programming, the interface 14 provides an apparatus for enabling the personal computer 16 to obtain data from the data transmission cable 8.

The listing of a specific implementation of the program loaded in the program memory 34 of the data signal capturing interface 14 is set forth in Appendix B forming a part of this specification. One skilled in the art can readily follow the program, but a brief overview of it is given here. The following operations of the program are implemented by the functional relationship between the program in the memory 34 and its application via the microprocessor 30.

The program listed in Appendix B initially sets up various ports of the data signal capturing interface 14. This portion of the listing continues through page B6.

The "handshake with application" portion on page B7 of the listing is used in establishing communication with the personal computer 16. During this portion of the program, the interface 14 receives instructions from the personal computer 16 as to whether all traffic or data only is to be captured. In the present preferred embodiment, the "data only mode" is the only one implemented; however, it is contemplated that the "all traffic mode" will be useful in multimaster communications subsequently referred to.

The "monitor mode loop" on pages B8 and B9 of the listing in Appendix B controls the transfer of the received data from the serial input circuit 28 to the dual port random access memory 32.

The "subroutines/interrupt service routines" portion of this program controls how the serial input circuit 28 captures and verifies data received through the cable 12 from the data transmission cable 8. In the particular implementation, the serial input circuit 28 synchronizes on the "flags" sent in the transmissions of the system 2, but these "flags" are filtered out in the present embodiment as explained above. When the serial input circuit 28 senses that capturable data is coming as indicated by the sensed "flags", the serial input circuit 28 begins collecting the serially transmitted data and verifying, such as by 16-bit CRC checksum, that the data is valid. If it is, the serial input circuit 28 signals the microprocessor 30 to transfer the data to the memory 32 under control of the aforementioned "monitor mode loop".

When data has been stored in the memory 32, the microprocessor 30 sets the busy line of the memory 32 (line "3" in FIG. 3A), which notifies the personal computer 16 that data is ready for display.

In the presently described embodiment, the present invention monitors only one channel of data; however, it is contemplated that the present invention can be readily adapted to accommodate two or more channels of data being transmitted within the system 2.

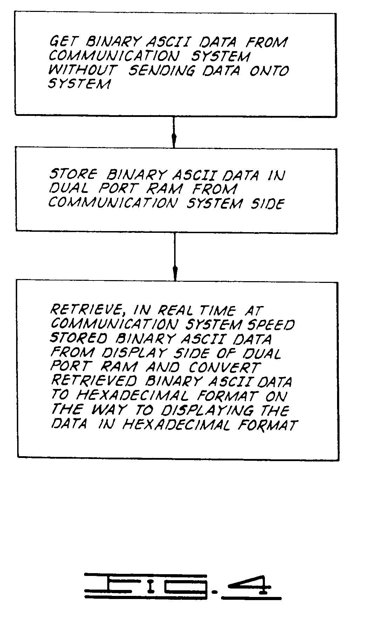

The foregoing provides an implementation of the first two steps of the flow chart shown in FIG. 4. That is, under control of the program in the memory 34 of the data signal capturing interface 14, the interface 14 gets binary ASCII data from communication system 2 without sending data back onto the system 2; and the interface 14 also stores the binary ASCII data in the dual port random access memory 32 through the port thereof on the communication system side of the interface 14 (i.e., the side shown in FIG. 3B).

Referring now to the personal computer 16, it can be any suitable conventional device within the class of computers known in the art as "personal computers" without limitation as to the type of operating system used. In the preferred embodiment it is preferably an XT model or higher. One specific implementation is a DOS-operating system GRiD 1500 series laptop computer with expansion port to which the interface 14 is connected. Regardless of the specific type used, the personal computer 16 comprises, as is well known, one or more microprocessor 36 (FIG. 1), one or more display screen 38 (such as a cathode ray monitor or liquid crystal display), and one or more memory 40 connected to the microprocessor 36. In the preferred embodiment, the memory 40 is programmed for operating the microprocessor 36 to retrieve a data signal in binary format from the data signal capturing interface 14, convert the retrieved binary ASCII data signal to hexadecimal format, and display the converted hexadecimal data signal through the display 38. These components of the personal computer 16 are interconnected by data bus 42 of the personal computer 16 (and an address bus and control lines as known and as identified along the connector strip shown in FIG. 3A). The data bus 42 interconnects the microprocessor 36, the display 38 and the data signal capturing means 14 so that data signals stored in the dual port random access memory 32 of the data signal capturing means 14 are communicated therefrom over the data bus 42 to the display 38. This maximizes the throughput speed from the memory 32 to the display 38 and allows the personal computer 16 to keep up with the speed of the data transmission system 2 (thus, the interface 14, by which high speed data acquisition occurs, and direct connection thereof to the data bus of the personal computer are important features of the present invention).

The personal computer 16 is conventional in all respects except for its programming in accordance with the present invention. Such programming can be from a diskette (e.g., a 3.5-inch diskette) inserted into a suitable drive of the personal computer 16. In the particular implementation of the present invention's program for the personal computer 16, the program, once loaded and initiated to run, generates instructions displayed on the display 38 to guide an operator's use of the overall invention.

As the program is executed, the user at the personal computer 16 will be prompted to enter a monitoring mode (provided no startup errors occur) . The "all traffic" mode will display all activity occurring on the ILAN transmission cable 8 of the particular implementation. This includes both data and tokens (when used). Tokens are used during the implementation of the multimaster communications to provide a way for a computer of the communication system 2 to use the transmission cable 8 while preventing data collisions. These tokens are passed continually on the cable 8 until data is transferred. The "data only" mode does just that, transferring only data by filtering all tokens. Only the latter mode is implemented at present.

After selecting the mode, the data scope display screen 38 will show keyboard options at the bottom of the screen. The options are "ESCAPE" for quitting the program and "C" to clear the screen. The version number of the program memory 34 of the interface 14 will be seen in the lower right corner of the screen.

The monitored data sensed from the cable 8 through the cable 12 will scroll in the middle of the display 38 and overwrite itself in a top to bottom fashion. There may be initial data on the screen which may be discarded by pressing "C". All data is displayed in hexadecimal format in the particular implementation, but other forms can be used.

Because information travels quickly, the "PAUSE" key may be used to halt the display; however, this does not halt ILAN communications over the cable 8 or into the interface 14, wherein data is stored in the memory 32 and then overwritten by subsequently received data. To display further data, press the "ENTER" key.

Referring specifically to the listing of the program for the memory 40 of the personal computer 16 set forth in Appendix C forming a part of this specification, this personal computer application program performs an initialization routine having such functions as setting up variables and the buffer size, clearing the display screen, setting up a screen format, handshaking with the interface 14, and setting memory maps. In doing this, it sends instructions used by the microprocessor 30 of the interface 14 (e.g., whether in "all traffic" or "all data" mode if both are implemented).

Of particular importance is the "while (1)" portion of the program of Appendix C. This portion collects an array of binary data from the dual port random access memory 32. In the particular implementation, an array equals the number of eight-bit bytes stored in the memory 32 of the interface 14. Each byte is split into two four-bit pieces, each of which is converted to its respective hexadecimal form. This hexadecimal representation is then displayed through the display 38. This data retrieval, conversion and display occurs solely over the data bus 42 of the personal computer 16 and within the registers defined by the program software and the microprocessor 36 to minimize the transfer time from the memory 32 to the display 38. In essence, the binary ASCII data stored in the memory 32 is converted to hexadecimal form and displayed on the fly. This enables the personal computer 16 to keep up with the 125 kilobaud rate of the particular implementation of the data transmission system 2.

The binary data that is received from the transmission system 2 is in command and response packets. That is, a command is issued from one of the devices 2,4 and a response is issued from the other of the devices 2,4. In the particular implementation of the present invention, when these commands and responses are displayed through the personal computer 16, they are shown in opposite video formats to be readily distinguishable. For example, a command can be displayed in reverse video and a response in standard video, or vice versa.

In summary, the program in the memory 40 of the personal computer 16 controls the personal computer 16 to retrieve, in real time at communication system speed, stored data from the display side of the dual port random access memory 32 and convert the retrieved data to a desired format (e.g., from ASCII to hexadecimal) on the way to displaying the data in such format as indicated in the flow chart of FIG. 4.

The previously described components and programs are used in performing the preferred embodiment method of the present invention, namely a method of enabling a personal computer to display data communicated over a data transmission cable between at least two devices, wherein the personal computer has a personal computer microprocessor with a data bus. This method comprises: connecting the data signal capturing interface 14 to the data transmission cable 8 (via the cable 12 in the FIG. 1 implementation) so that the data signals are also communicated to the data signal capturing interface 14; receiving and storing data signals in the data signal capturing interface 14; and transferring stored data signals into the personal computer 16 from the data signal capturing interface 14 for displaying data signals through the display screen 38 of the personal computer 16. Preferably, the data signals are communicated to the data signal capturing interface 14 without the data signal capturing interface 14 communicating signals back to the data transmission cable 8. In the particular implementation, transferring the data includes retrieving onto the data bus 42 of the personal computer 16 a data signal in binary ASCII format from the data signal capturing interface 14, converting the retrieved binary ASCII data signal to hexadecimal format, and communicating the converted hexadecimal data signal over the data bus 42 for display through the display 38.

As to the specific use to which the embodiment described above is intended to be put to use at an oil or gas well site, the present invention provides, again using the previously described components and programs in the preferred embodiment, a method of monitoring data signals transmitted between at least two devices over a local area network cable connecting the devices at an oil or gas well site. This method is defined to include: copying transmitted data signals into the memory 32 at the well site at a speed at least equal to a speed at which the data signals are transmitted on the local area network cable 8; and displaying at the well site on the display 38 of the personal computer 16 representations of the copied data signals. In the preferred embodiment, the speed at which the data signals are transmitted on the local area network cable 8 is greater than 115.2 kilobaud rate which RS-232 data monitors can achieve and less than the 4 megabaud (and greater) rate for which token ring and Ethernet data scopes are intended. In the particular implementation described, the speed at which the data signals are transmitted on the local area network cable 8 is 125 kilobaud. The maximum speed of the particular implementation of the present invention is presently about 180 kilobaud, but it is contemplated that an overall operating range can be from above 115.2 kilobaud to below 500 kilobaud. Copying the transmitted data signals preferably includes sensing the transmitted signals on the local area network cable 8 without inputting other signals onto the local area network cable 8. Displaying on the display 38 of the personal computer 16 preferably includes: communicating copied data signals in binary ASCII format from the memory 32 directly onto the data bus 42 of the microprocessor 36 of the personal computer 16; converting the communicated copied data signals from binary ASCII format to hexadecimal format; and activating the display 38 of the personal computer 16 with the converted data signals transferred directly thereto over the data bus 42.

Thus, the present invention is well adapted to carry out the objects and attain the ends and advantages mentioned above as well as those inherent therein. While a preferred embodiment of the invention has been described for the purpose of this disclosure, changes in the construction and arrangement of parts and the performance of steps can be made by those skilled in the art.

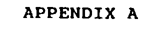

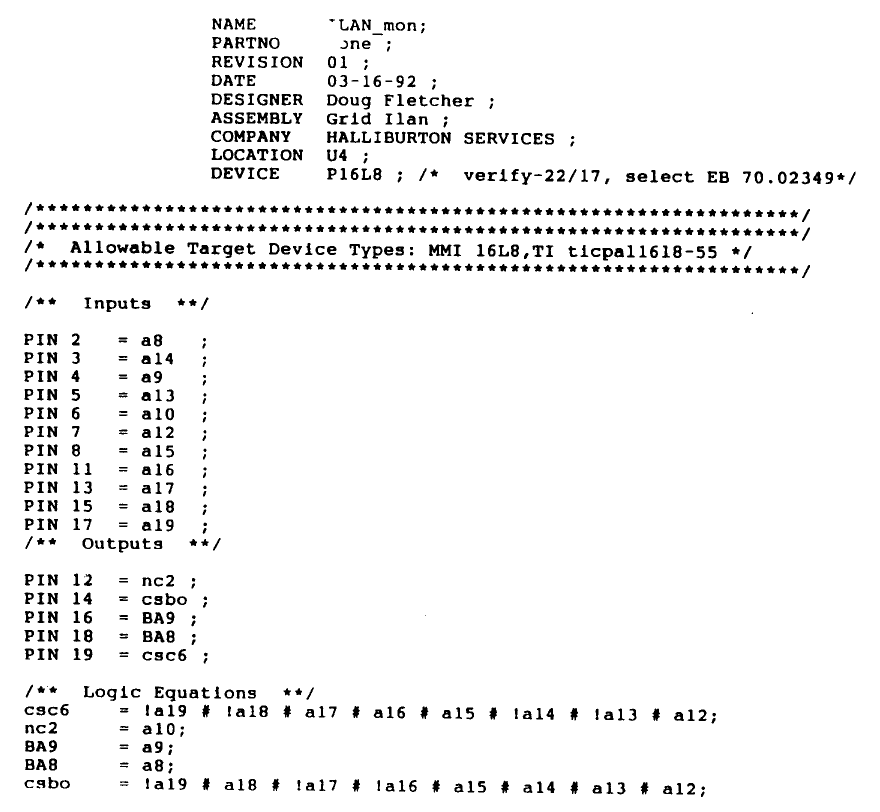

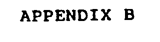

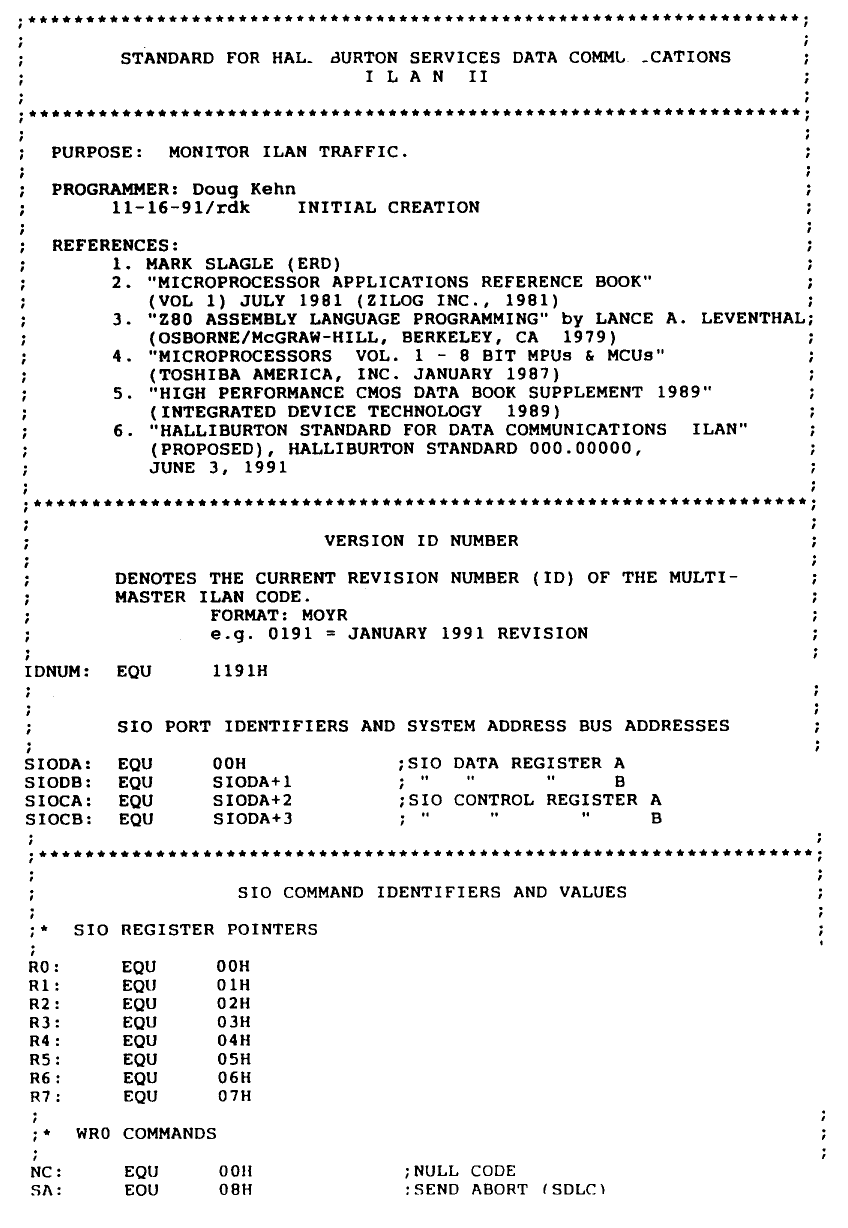

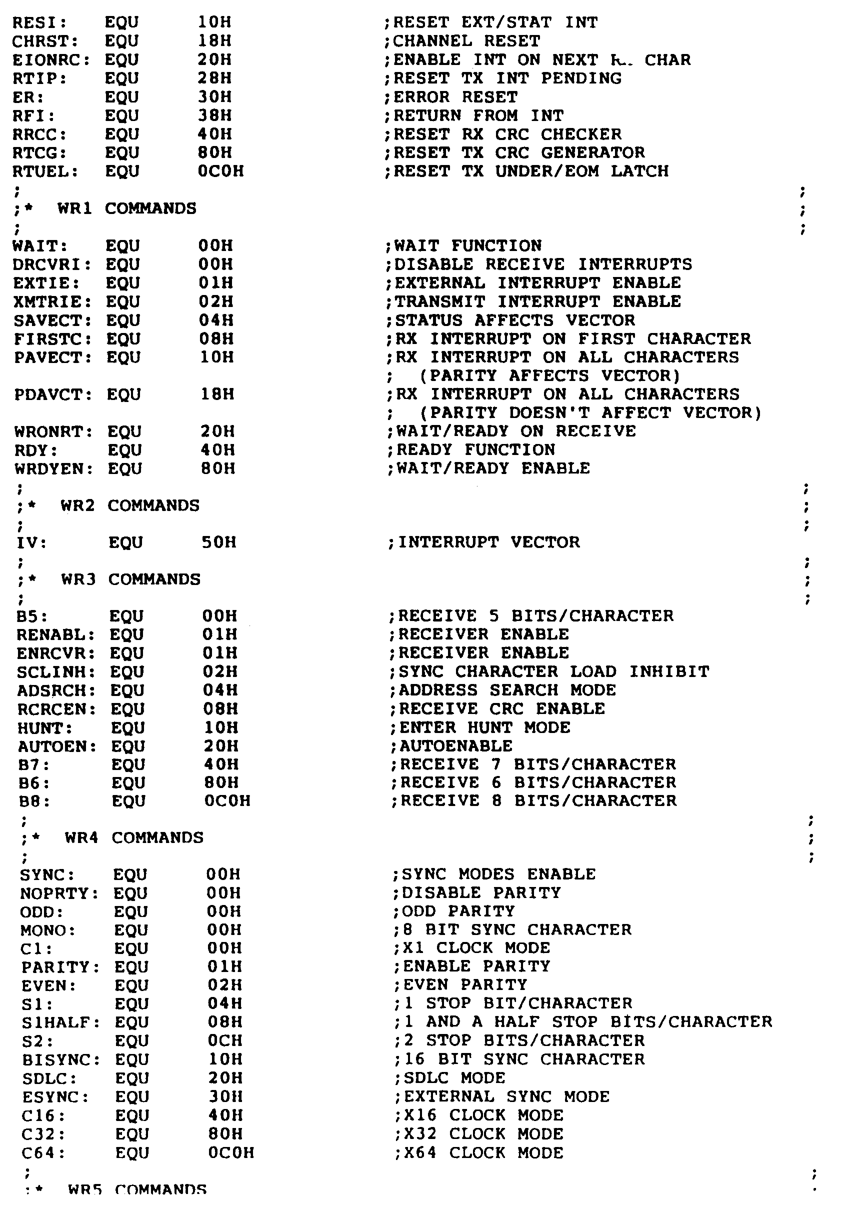

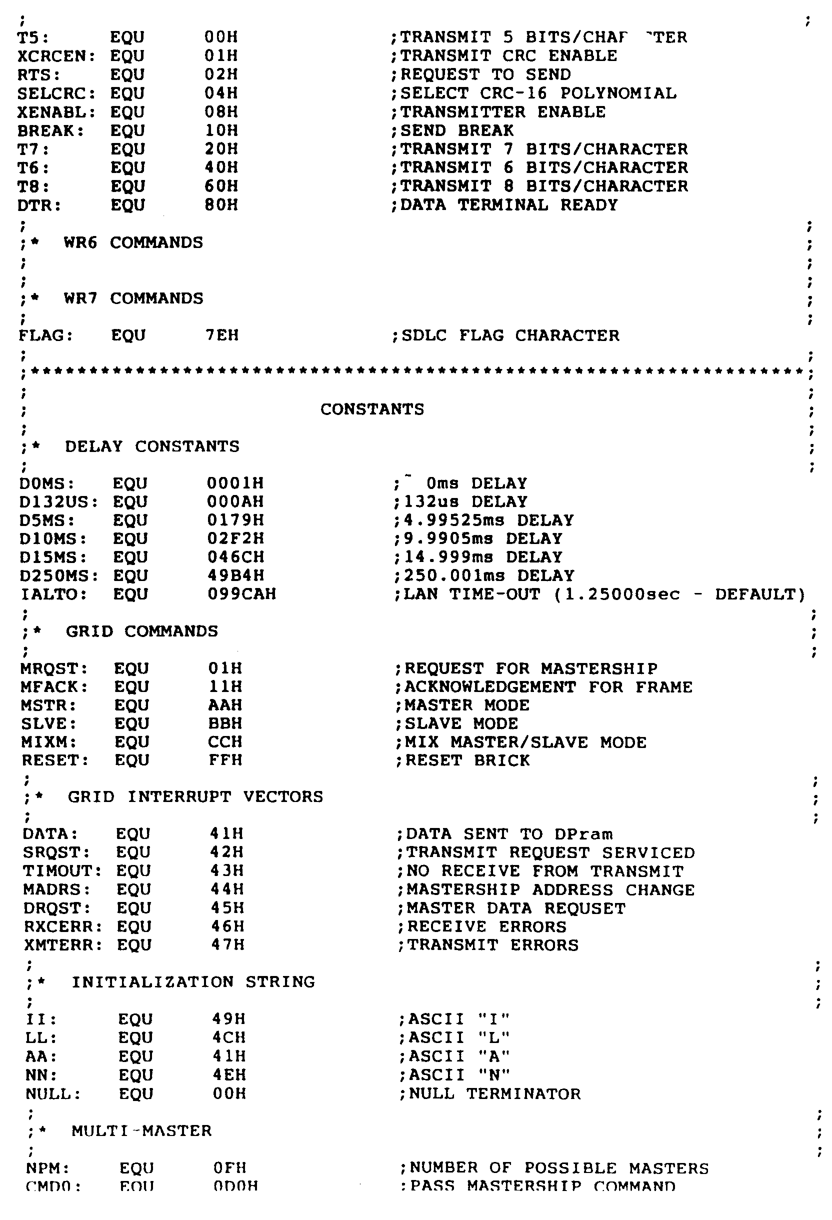

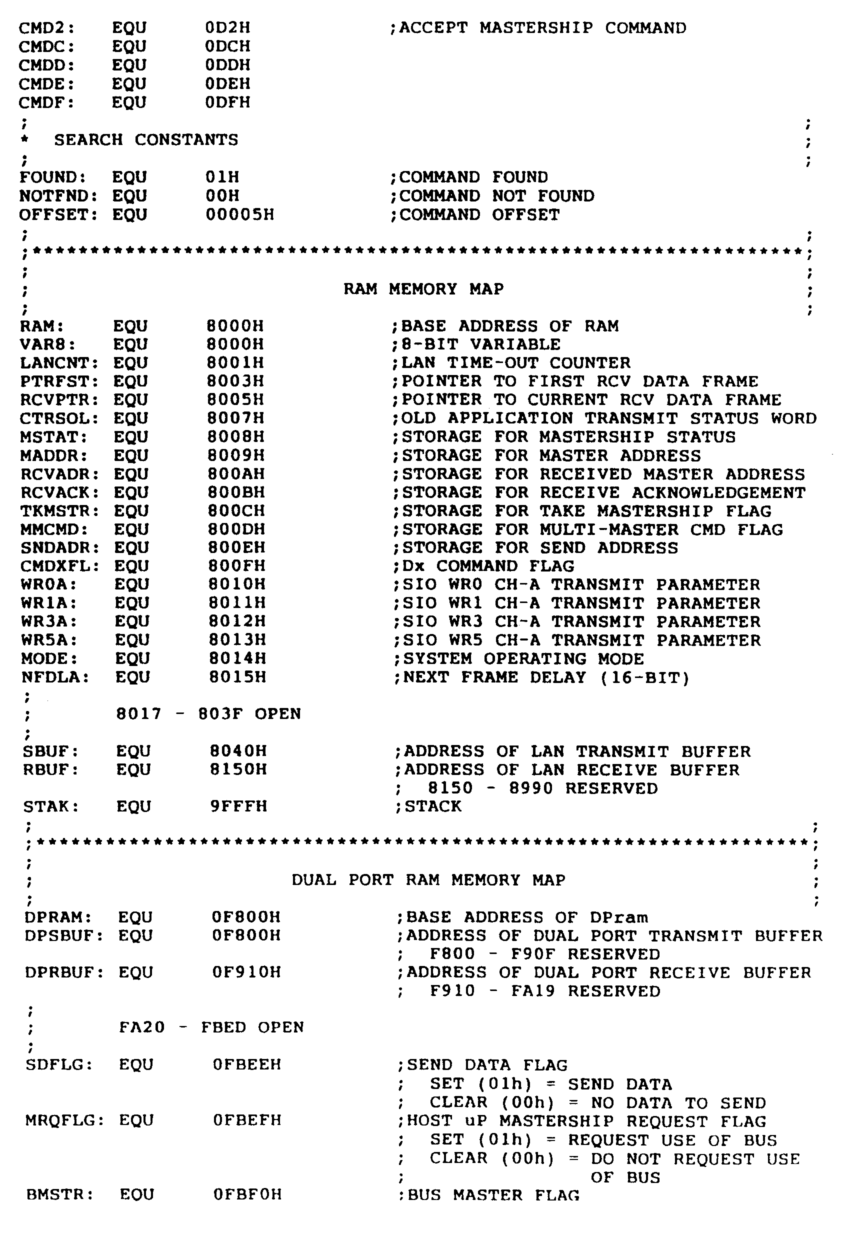

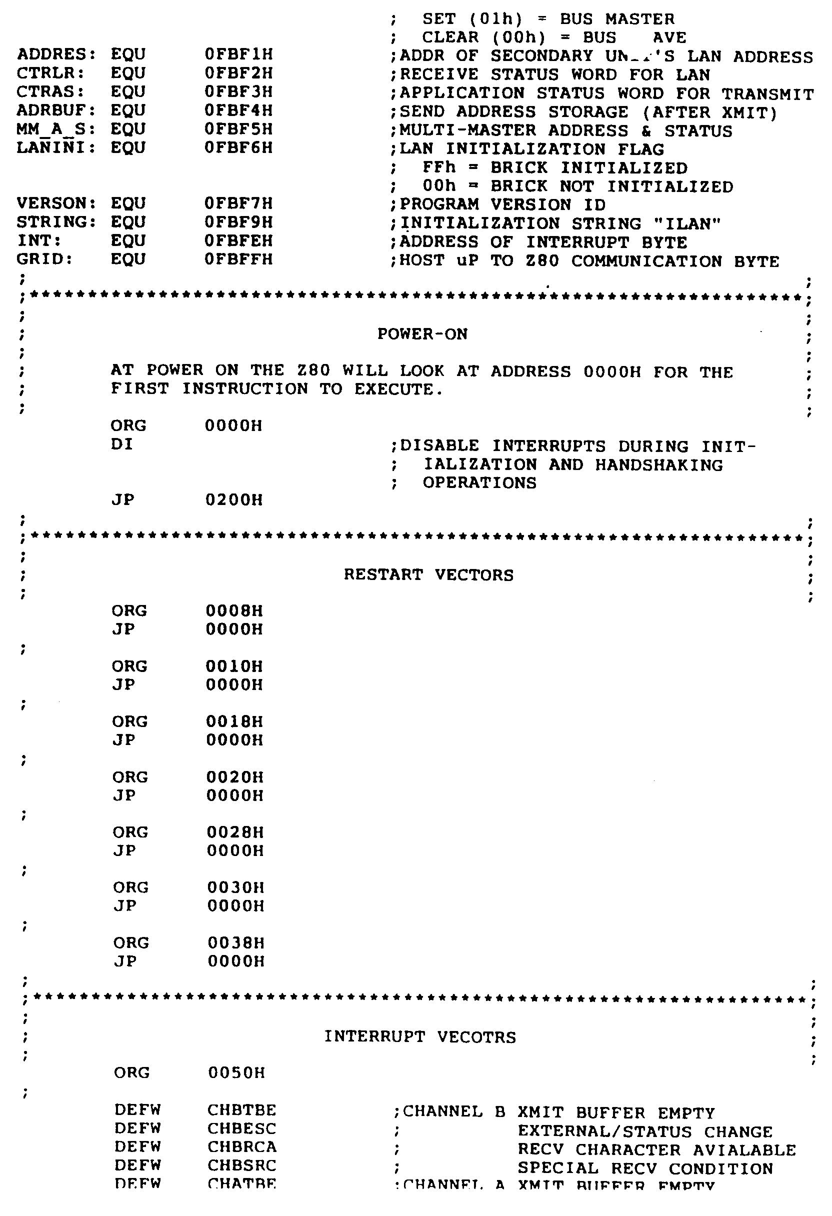

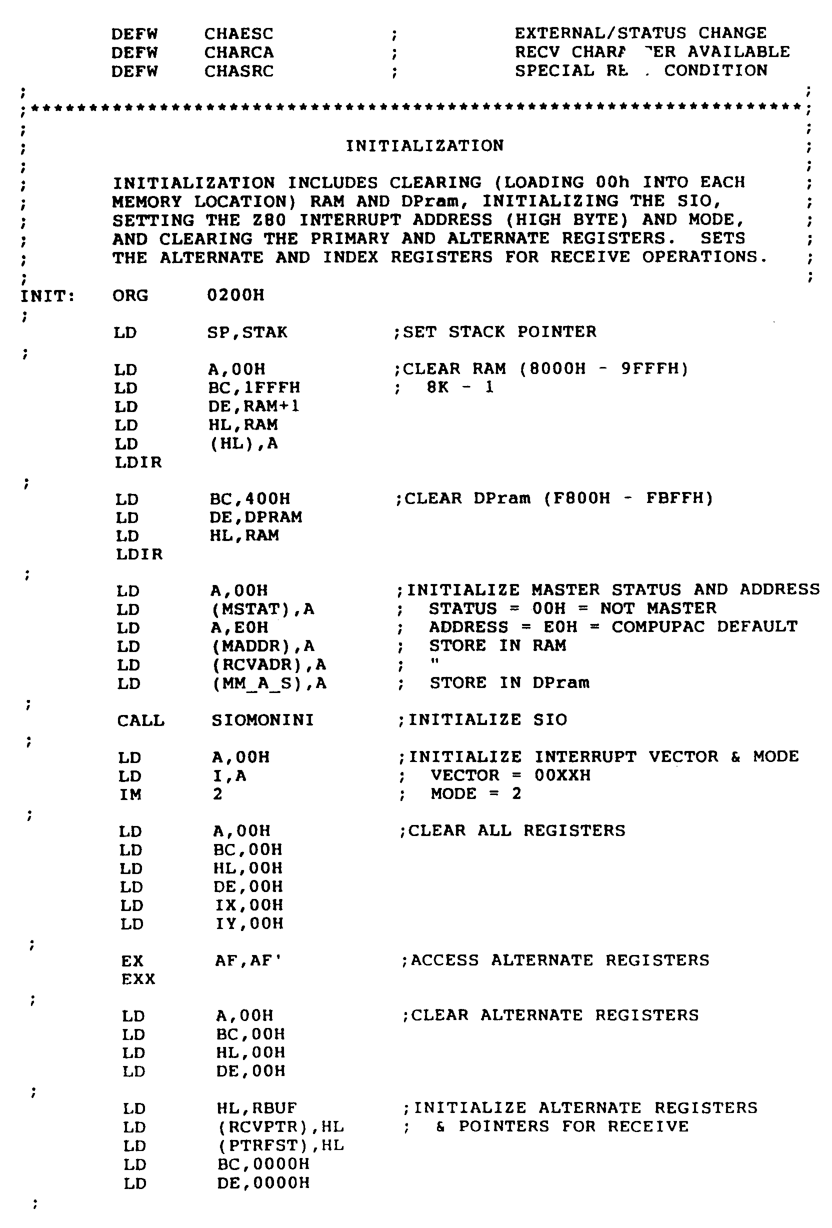

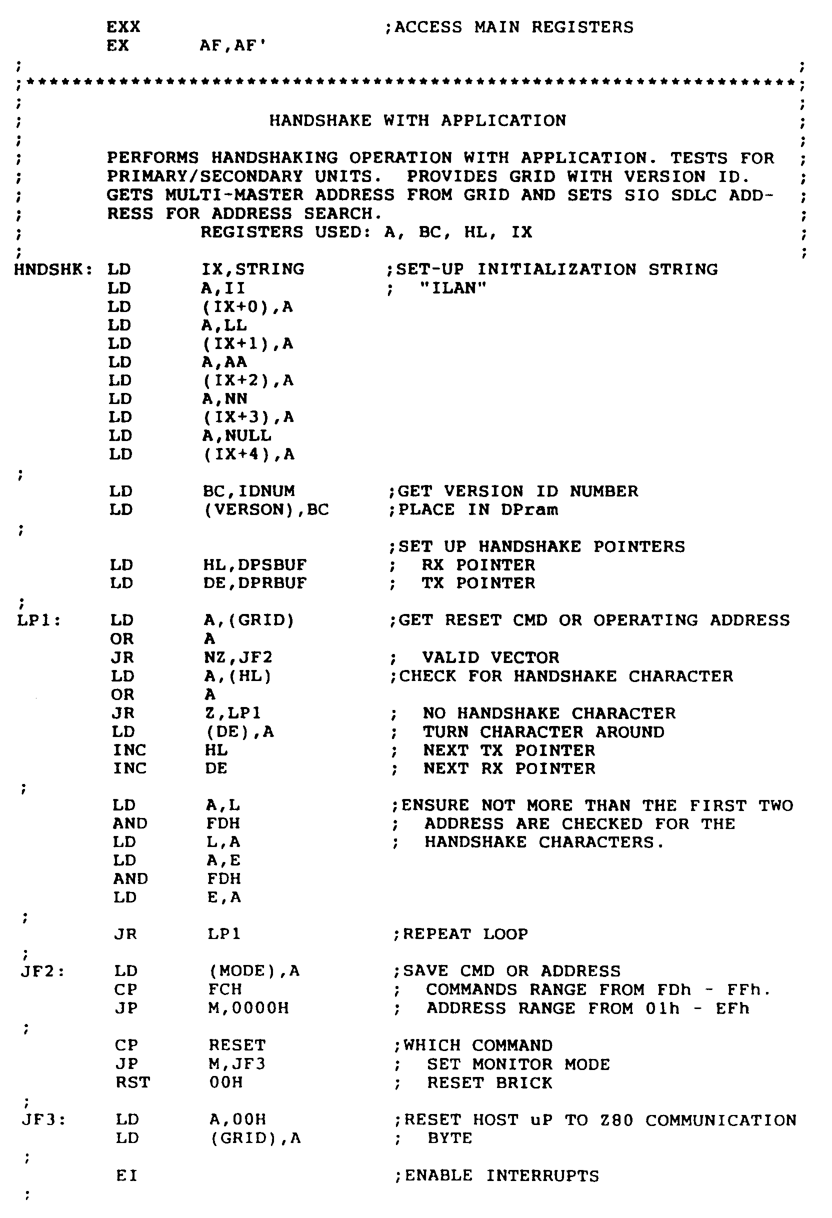

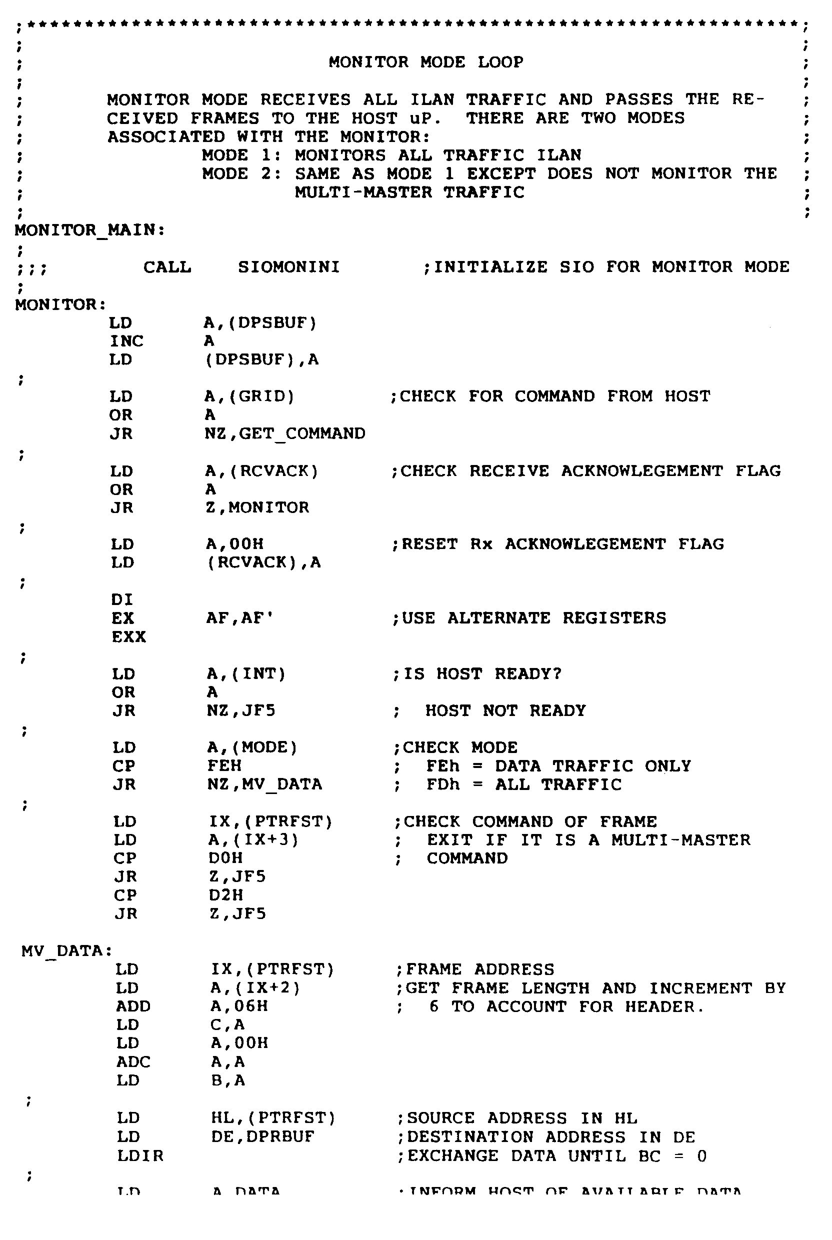

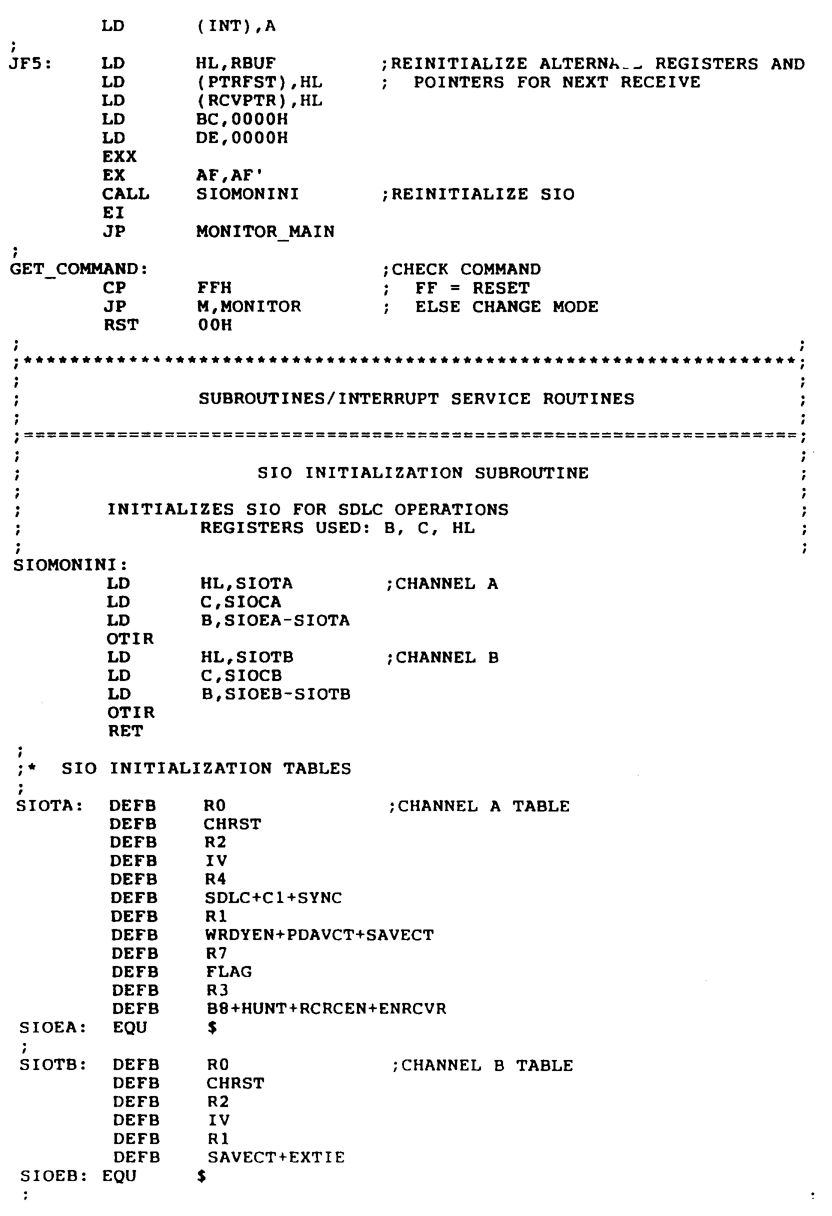

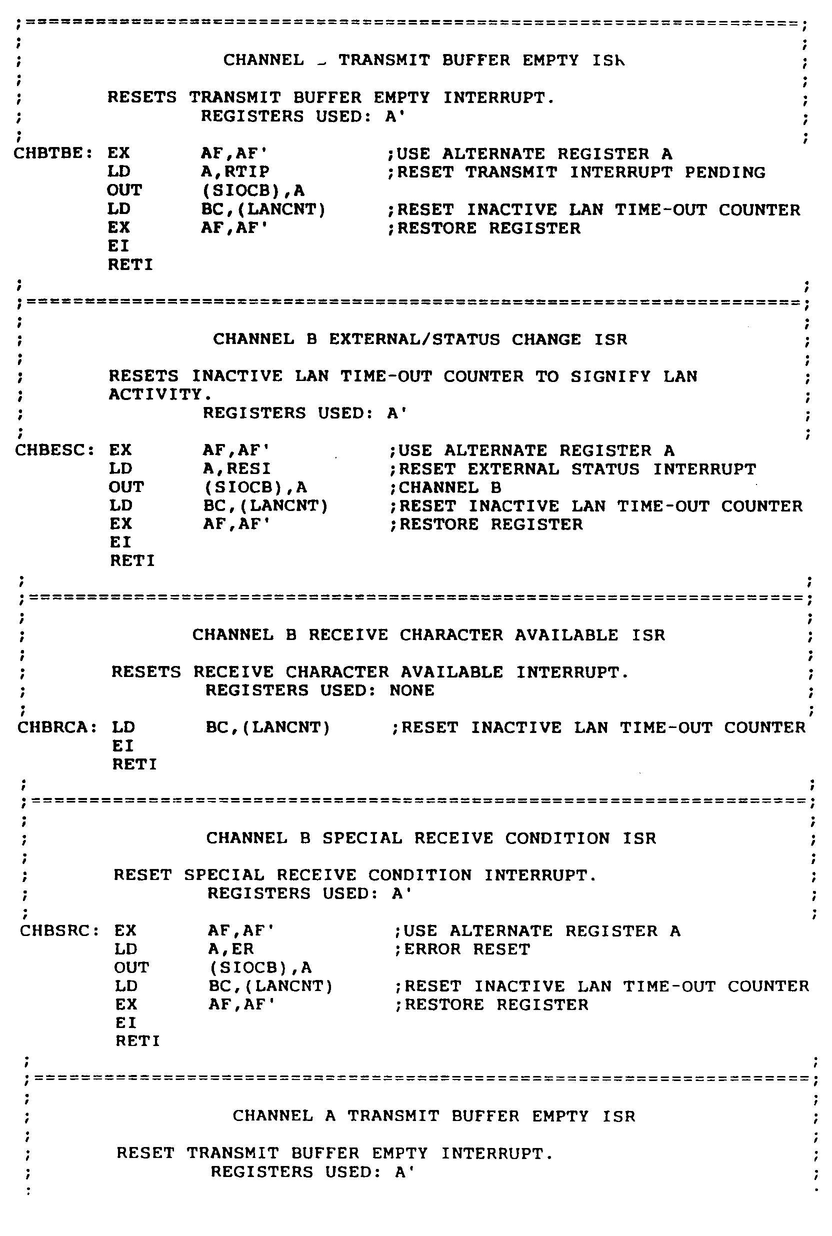

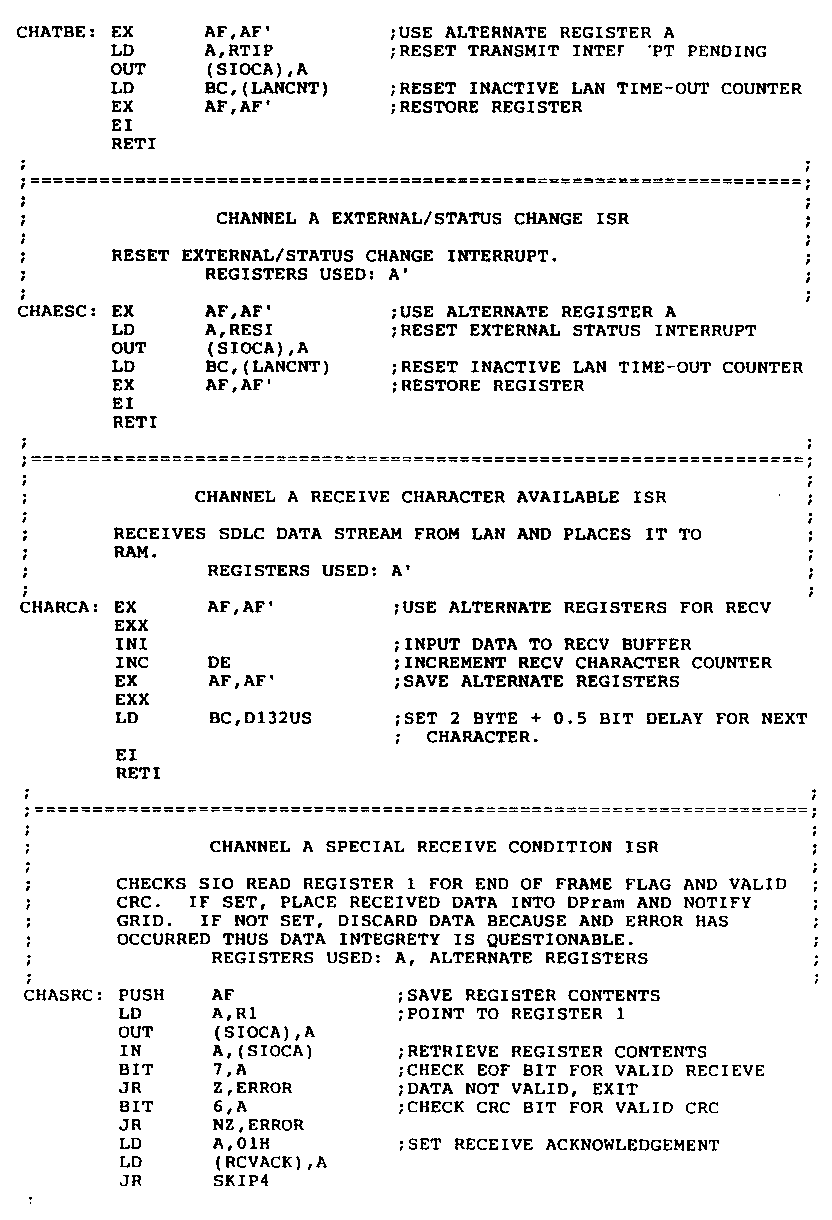

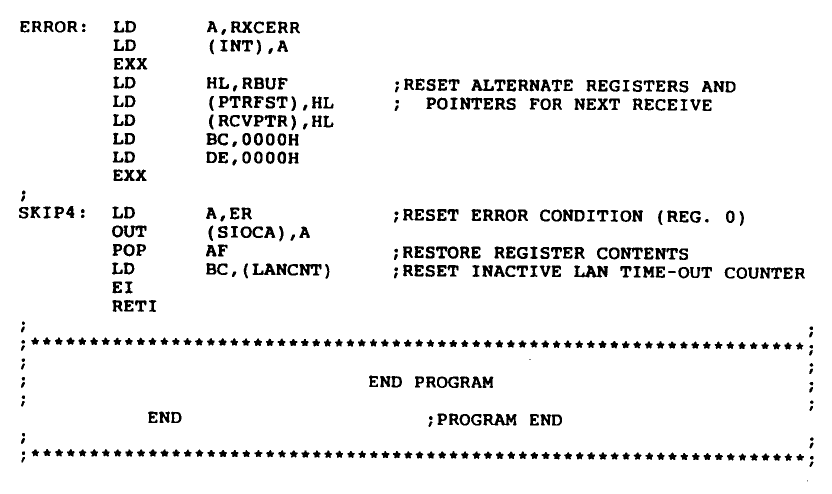

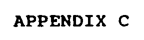

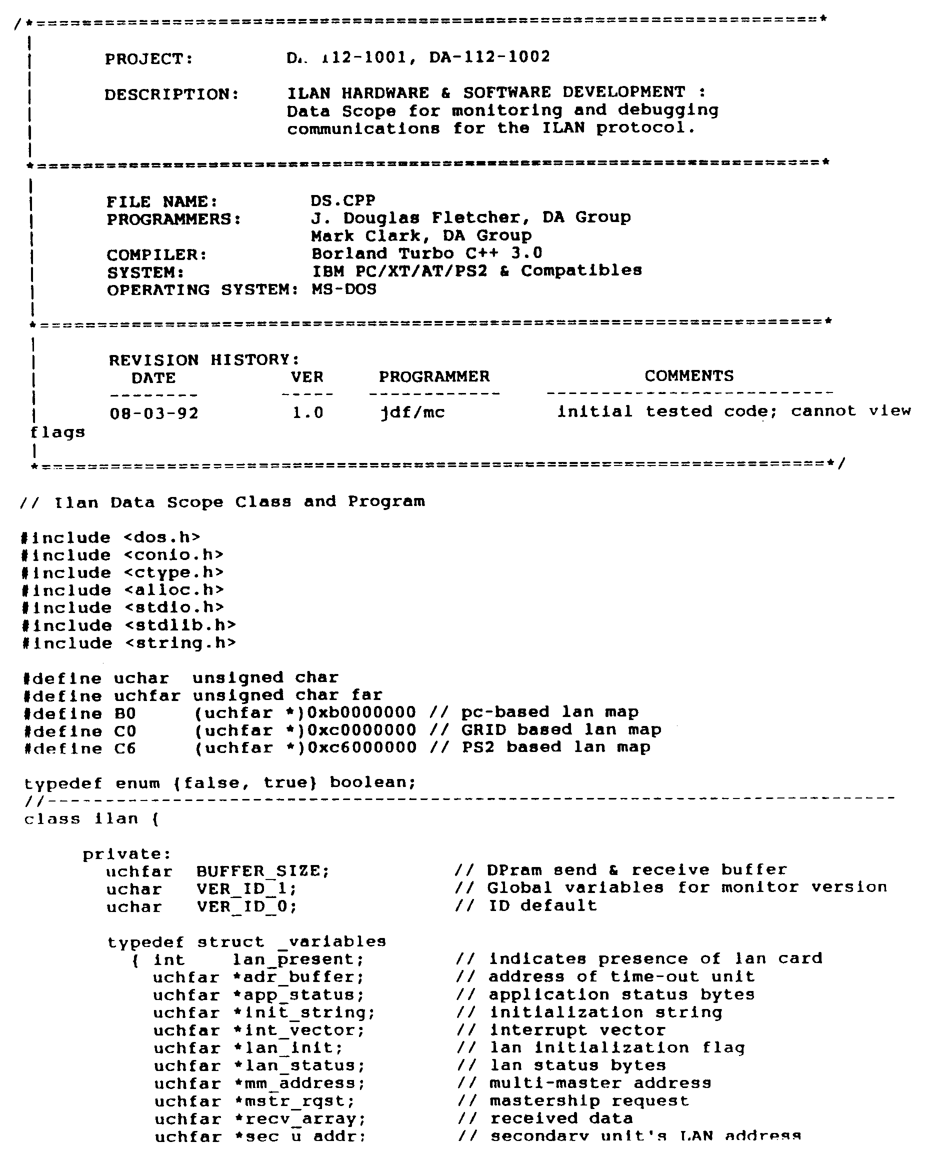

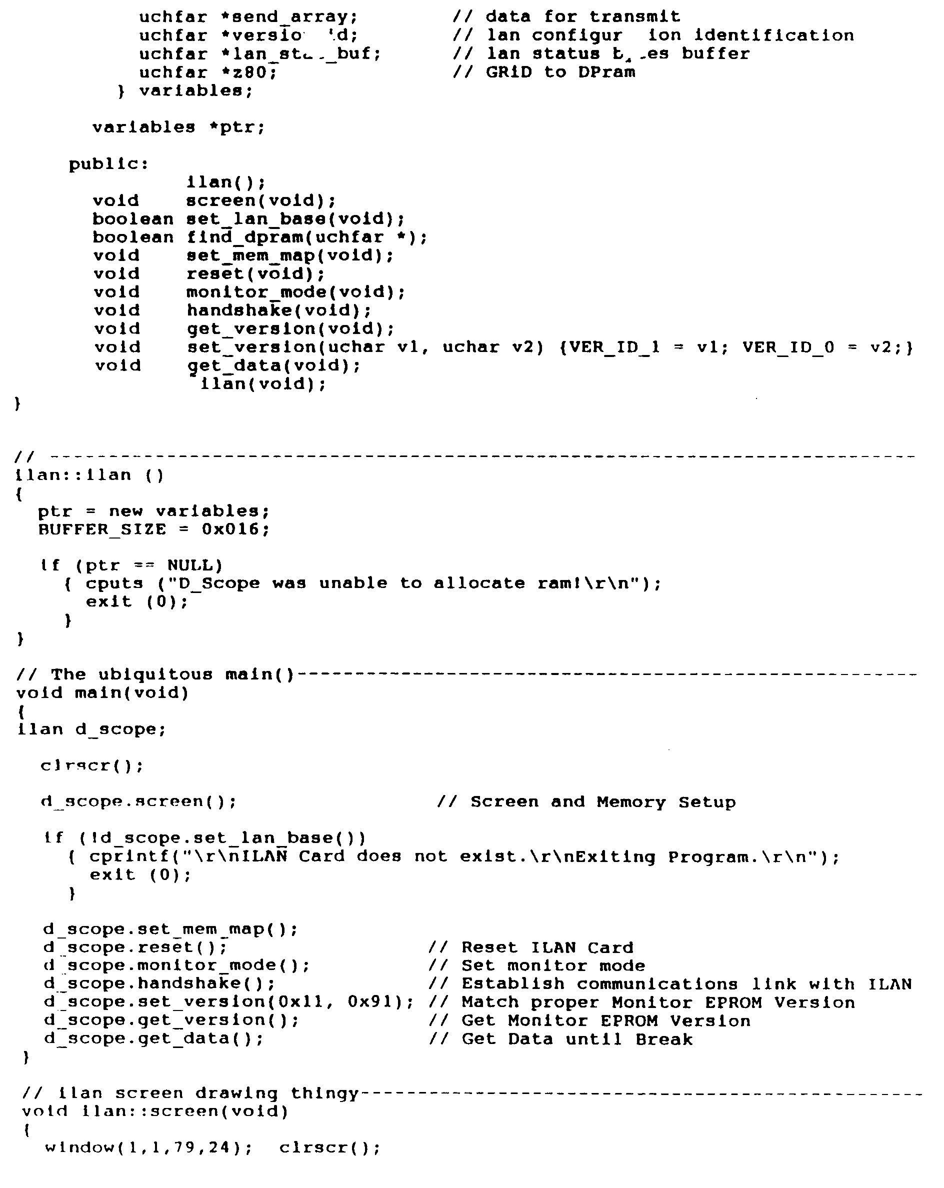

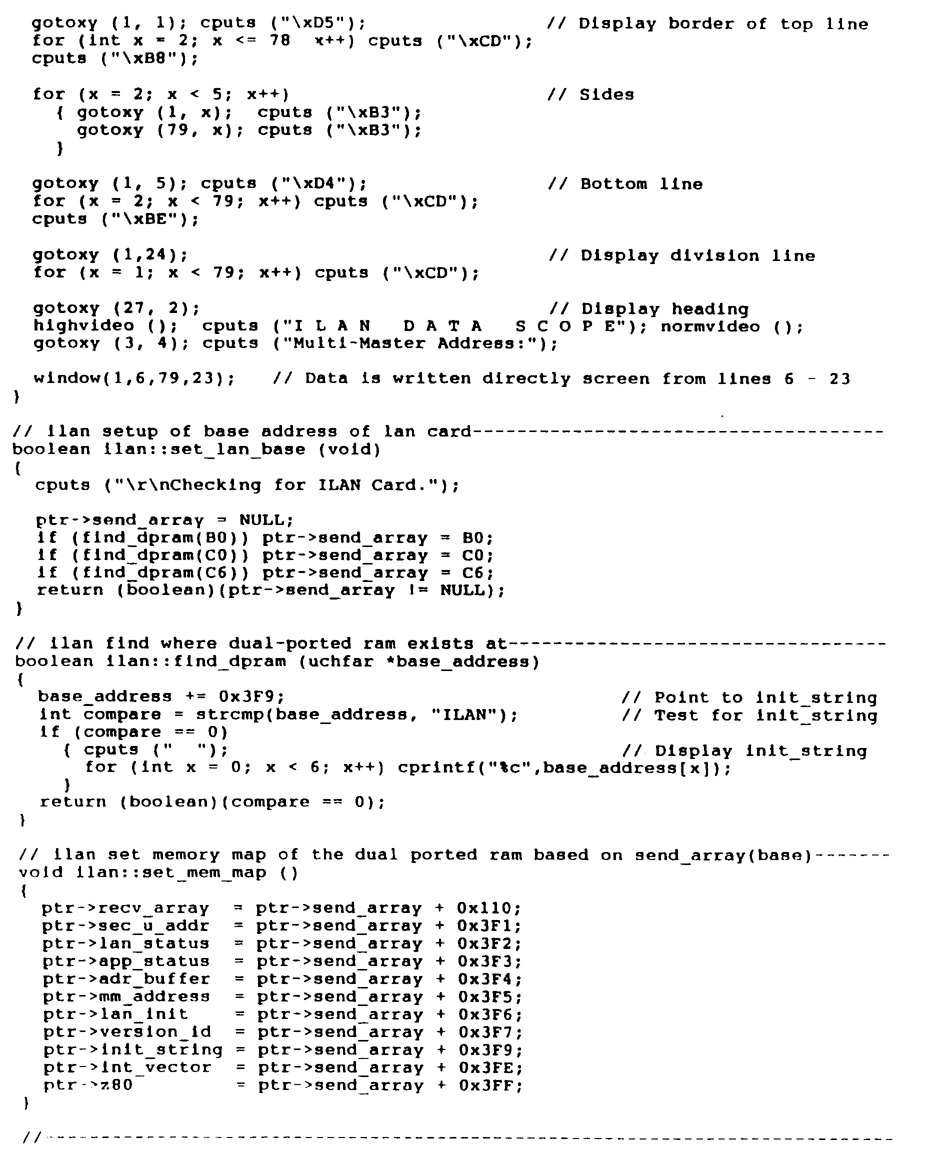

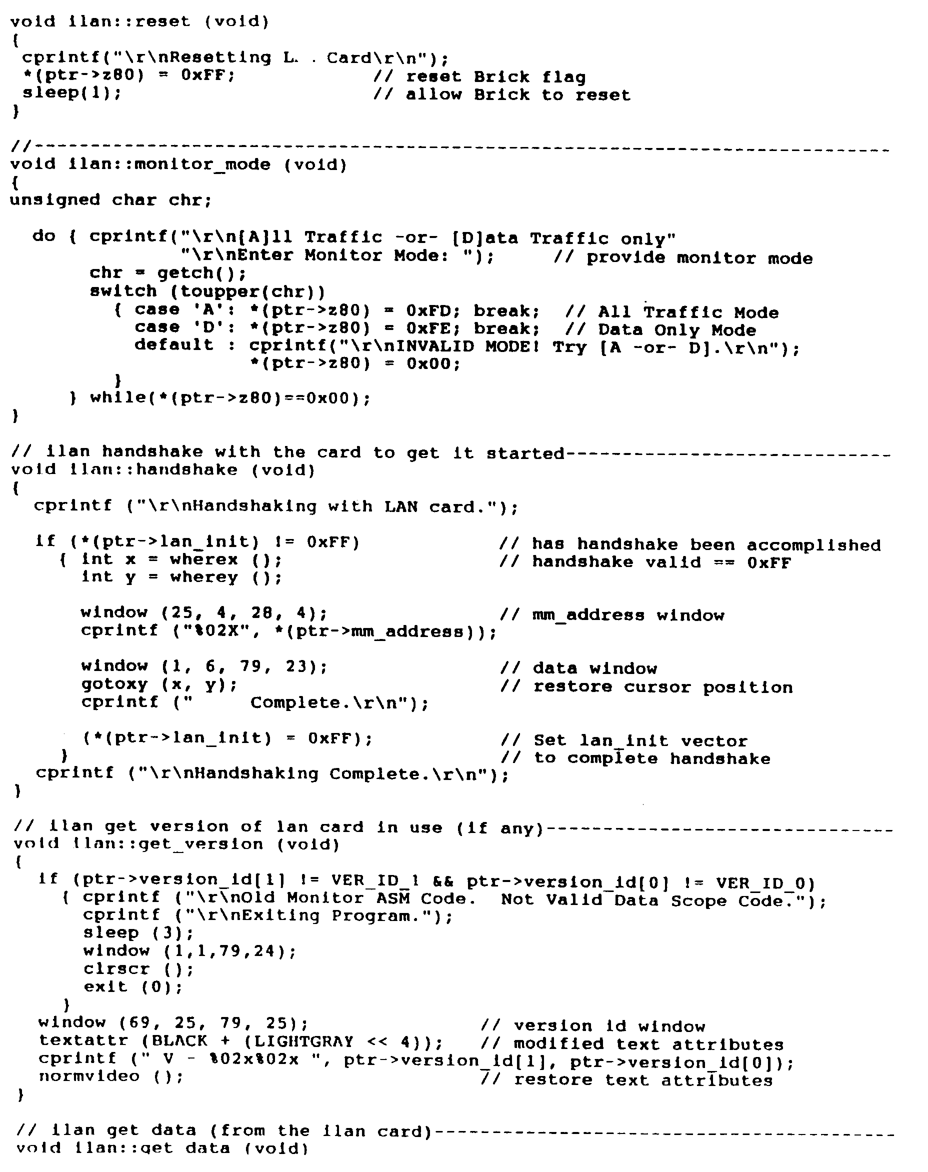

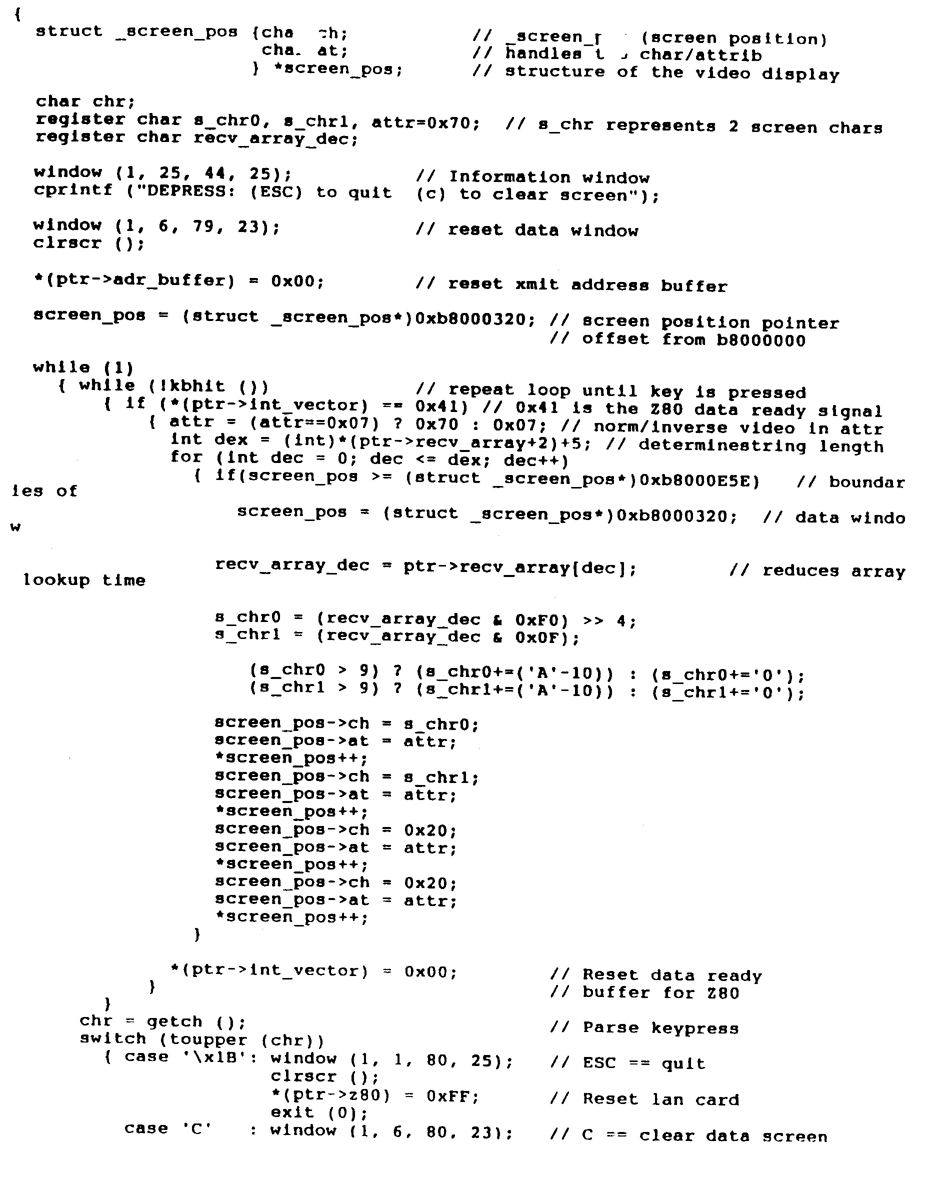

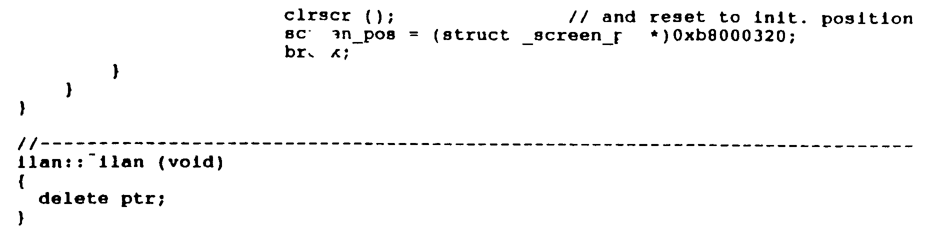

## Claims

1. A data scope which comprises connector means (12) for connecting into a data transmission system (2), which system (2) has at least two devices (4,6) between which data signals are communicated, so that the data signals are also communicated through said connector means (12); data signal capturing means (14), connected to said connector means, for receiving and storing data signals communicated through said connector means (12); and a personal computer (16) connected to said data signal capturing means (14) for displaying data signals stored in said data signal capturing means (14).

2. A data scope according to claim 1, wherein the personal computer (16) includes a microprocessor (36), a display (38), and a data bus (42) interconnecting said microprocessor (36), said display (38) and said data signal capturing means (14) so that data signals stored in said data signal capturing means (14) are directly communicated over said data bus (42) to said display (38).

3. A data scope according to claim 2, wherein the personal computer (16) further comprises a memory (40) connected to said microprocessor (36) and programmed for operating said microprocessor (36) to retrieve a data signal in a first format from said data signal capturing means (14) over said data bus (42), convert the retrieved data signal to a second format, and display the converted data signal through said display (38).

4. A data scope according to claim 1,2 or 3, wherein said data signal capturing means (14) includes serial input means (28) for receiving serial data from said connector means (12); a data signal capturing control microprocessor (30) connected to said serial input means (28); a data memory (32) connected to said data signal capturing control microprocessor (30) and said serial input means (28); a program memory (34) connected to said data signal capturing control microprocessor (30), said program memory (34) being programmable with means for operating said data signal capturing control microprocessor (30) to transfer data received by said serial input means (28) to said data memory (32) without communicating any signal onto said connector means (12) and into the data transmission system; and means for connecting said data memory (32) directly to said data bus (42) of said personal computer (16) so that said microprocessor (36) of said personal computer (16) directly accesses data stored in said data memory (32).

5. A method of enabling a personal computer (16) to display data communicated over a data transmission cable (8) between at least two devices (4,6), wherein the personal computer (16) has a personal computer microprocessor (36) with a data bus (42), said method comprising connecting a data signal capturing interface (14) to the data transmission cable (8) so that the data signals are also communicated to the data signal capturing interface (14); receiving and storing data signals in the data signal capturing interface (14); and transferring stored data signals into the personal computer (16) from the data signal capturing interface (14) for displaying data signals through a display screen of the personal computer (16).

6. A method according to claim 5, wherein said transferring includes retrieving onto the data bus (42) a data signal in a first format from the data signal capturing interface (14), converting the retrieved data signal to a second format, and communicating the converted data signal over the data bus (42) for display.

7. A method according to claim 5 or 6, wherein data signals are communicated to the data signal capturing interface (14) from the data transmission cable (8) without the data signal capturing interface (14) communicating data signals to the data transmission cable (8).

8. A method of monitoring data signals transmitted between at least two devices (4,6) over a local area network cable connecting the devices at an oil or gas well site, said method comprising copying transmitted data signals into a memory (40) at the well site at a speed at least equal to a speed at which the data signals are transmitted on the local area network cable (8); and displaying at the well site on a monitor (38) of a personal computer (16) representations of the copied data signals.

9. A method according to claim 8, wherein displaying on a monitor (38) of a personal computer (16) includes communicating copied data signals in a first format from the memory (40) directly onto a data bus (42) of a microprocessor (36) of the personal computer (16); converting the communicated copied data signals from the first format to a second format; and activating the monitor (38) of the personal computer (16) with the converted communicated copied data signals transferred directly thereto over the data bus (42).
